Europäisches Patentamt

European Patent Office

Office européen des brevets

(19)

(11) Veröffentlichungsnummer: **0 299 207**
**A2**

(12) **EUROPÄISCHE PATENTANMELDUNG**

(21) Anmeldenummer: 88109321.5

(22) Anmeldetag: 10.06.88

(51) Int. Cl.4: **H04J 3/06 , H04Q 11/04**

(30) Priorität: 15.07.87 DE 3723436

(43) Veröffentlichungstag der Anmeldung:
18.01.89 Patentblatt 89/03

(84) Benannte Vertragsstaaten:
AT BE CH DE FR GB IT LI

(71) Anmelder: Siemens Aktiengesellschaft Berlin
und München
Wittelsbacherplatz 2
D-8000 München 2(DE)

(72) Erfinder: Leibe, Gerhard, Dipl.-Ing.
Hirsch-Gereuth-Strasse 43
D-8000 München(DE)
Erfinder: Weiss, Albert, Dipl.-Ing. (FH)
Stadelheimerstrasse 59
D-8000 München(DE)

(54) Schaltungsanordnung zum gezielten Lesen von Informationen eines bit- gruppenorientierten, kontinuierlichen Informationsstromes an einer ISDN-orientierten Schnittstelle.

(57) Mit Hilfe der Schaltungsanordnung werden aus den an einer ISDN-orientierten Schnittstelle (IOM) vorliegenden Bittaktsignalen (bti) und Bitgruppentaktsignalen (bgti) - definieren die Grenzen der 32 Bit aufweisenden Bitgruppen (BG) - die Lesezeitpunkte für ein gezieltes Lesen von auf der ISDN-orientierten Schnittstelle (IOM) übermittelten Informationen für eine Aufzeichungseinrichtung (AUE) gebildet und an diese weitergeleitet. Die in Form von Bittaktimpulsen (bti) vorliegenden Lesezeitpunkte zeigen der Aufzeichungseinrichtung (AUE) an, zu welchen Zeitpunkten die Informationen zu lesen und anschließend zu speichern sind. Die Schaltungsanordnung enthält ein Schieberegister (SR), das durch eine der Anzahl von Bits einer Bitgruppe (BG) entsprechende Anzahl von Registern gebildet ist, eine Rücksetzeinrichtung, die beispielsweise durch ein Invertierglied (INV) und ein Schaltmittel (SI) realisiert ist, ein Undverknüpfungsglied (UV) sowie mehere Schaltmittel (S1...S16), deren Einstellung bestimmt, welche Informationen beziehungsweise Bits einer Bitgruppe (BG) zu lesen und abzuspeichern sind.

FIG 1

## Schaltungsanordnung zum gezielten Lesen von Informationen eines bitgruppenorientierten, kontinuierlichen Informationsstromes an einer ISDN-orientierten Schnittstelle

Für Systemkomponenten - wie z. B. Teilnehmer- und Vermittlungseinrichtungen - von ISDN-Fernmeldenetzen werden in zunehmendem Maße integrierte Schaltkreise entwickelt und eingesetzt. Diese Schaltkreise - überwiegend in Masken-Ätz-Technik realisiert - enthalten jeweils vollständige Funktionskomplexe der Systemkomponenten. Ein solcher Funktionskomplex kann beispielsweise ein übertragungstechnisches Verfahren sein, mit dem die Informationen über die Leitungen im Teilnehmeranschlußbereich einer Vermittlungseinrichtung übertragen werden. In der Druckschrift "Telcom Report" 9 (1986), No. 4, Page 230 to 234, sind für ISDN-Systemkomponenten entwickelte Schaltkreise sowie ein Schaltkreiskonzept dargestellt und erläutert. Das Schaltkreiskonzept basiert auf einer 'IOM Architecture', d. h. auf einem ISDN-orientierten Schnittstellenkonzept. Dieses Schnittstellenkonzept beinhaltet im wesentlichen eine serielle interne Datenschnittstelle und eine ISDN-orientierte Schnittstelle, die im weiteren mit IOM-Schnittstelle bezeichnet ist. Diese IOM-Schnittstelle ist mit jeweils einer Empfangs- und Datenleitung, über die Informationen seriell überwiegend mit einer Datenrate von 256 KBit/s übermittelt werden, sowie mit jeweils einer Bitgruppen(rahmen)-Taktleitung mit 8 KHz-Taktfrequenzsignalen und einer Bittaktleitung mit 512 KHz-Bittaktfrequenzsignalen gebildet. Der Bitgruppentakt definiert die Grenzen der jeweils 32 Bit aufweisenden Bitgruppen innerhalb des seriellen Informationsstromes. Jede Bitgruppe ist des weiteren in vier Untergruppen á 8 Bit unterteilt, wobei die ersten beiden Bituntergruppen jeweils einem Informations(B)-Kanal eines ISDN-Basis anschlusses zugeordnet sind und die dritte Bituntergruppe einen Überwachungskanal und die vierte Bituntergruppe den ISDN-Signalisierungs(D)-Kanal - 2 Bit - sowie Aktivierungs- und Zugriffskanal enthalten. Im Überwachungskanal wird die Übertragung der Nachrichteninformationen über die einzelnen Übermittlungsabschnitte überwacht. Der Aktivierungskanal ist für die Aktivierung bzw. Deaktivierung eines der IOM-Schnittstelle folgenden Schaltkreises durch einen vorhergehenden Schaltkreis vorgesehen. Über den Zugriffskanal wird der Zugriff auf den Überwachungskanal geregelt.

Da die IOM-Schnittstelle eine zentrale Schnittstelle im Schaltkreiskonzept repräsentiert und einer der wenigen außerhalb der Schaltkreise angeordneten Zugriffspunkte auf den Informationsfluß im Teilnehmeranschlußbereich einer ISDN-Vermittlungseinrichtung darstellt, besteht insbesondere im Fehler- bzw. Störungsfall der Wunsch, die über die IOM-Schnittstelle übermittelten Informationen gezielt - z. B. nur den Signalisierungskanal - oder pauschal mitzulesen und aufzuzeichnen. Für die Aufzeichnung der Informationen sind bereits Aufzeichnungseinrichtungen bzw. Protokolltester und mit Speichereinrichtungen ausgerüstete 'Logiganalyser' bekannt, die seriell vorliegende Informationen - auch mittels TTL-Spannungspegel repräsentierte Informationen - kontinuierlich lesen und speichern.

Der Erfindung liegt die Aufgabe zugrunde, mit Hilfe einer einfachen, mit geringem Aufwand zu realisierenden Schaltungsanordnung ein gezieltes Lesen der über die IOM-Schnittstelle übermittelten Informationen durchzuführen, d. h. mit Hilfe einer einfachen Schaltungsanordnung die exakten Lesezeitpunkte ermitteln und an eine Aufzeichungseinrichtung weiterleiten. Die Aufgabe wird ausgehend von der eingangs beschriebenen, auf dem ISDN-Schaltkreiskonzept basierenden IOM-Schnittstelle durch die kennzeichnenden Merkmale des Anspruches 1 gelöst.

Der mit der Erfindung erzielbare Vorteil liegt darin, daß mittels einer aus wenigen Bauelementen bestehenden Schaltungs anordnung eine zu definierten Zeitpunkten die über die Empfangs- bzw. Sendeleitung übermittelten Informationen der IOM-Schnittstelle lesende und aufzeichnende Aufzeichnungseinrichtung über entsprechende Kontaktmittel mit der IOM-Schnittstelle verbindbar ist.

Eine Möglichkeit, zusätzlich Bauteile einzusparen, besteht darin, ein Schieberegister einzusetzen, dessen Registerzahl der Hälfte der Anzahl der Bits einer Bitgruppe entspricht - siehe im einzelnen Anspruch 2. Hierbei ist die Rücksetzeinrichtung durch ein Invertierglied zu realisieren, wobei dieses Invertierglied, je nachdem, für welche Bituntergruppe die Lesezeitpunkte ermittelt werden, eingefügt oder entfernt wird. Diese besonders einfache Lösung basiert darauf, daß die Bitgruppenfrequenzsignale in einer Form vorliegen, bei der durch direktes Anlegen dieser Signale an den Schiebe-Setz-Eingang des Schieberegisters ein Lesen in den ersten beiden Bitgruppen ermöglicht wird. Die gezielte Auswahl der zu lesenden Bits erfolgt hierbei durch entsprechende Einstellung der an den Paralleleingängen angeordneten Schaltmittel. Um ein Lesen der Informationsbits in der jeweils dritten und vierten Bituntergruppe zu ermöglichen, sind die Bitgruppenfrequenzsignale lediglich mittels eines Invertiergliedes zu invertieren, wobei die gezielte Auswahl der zu lesenden Informationsbits wiederum durch eine entsprechende Einstellung derselben vorher verwendeten Schaltmittel erfolgt. Dieses Invertierglied stellt ebenfalls eine besonders einfache und Bauteile sparende Ausgestaltung der Erfindung dar, da bei Verwendung eines Schieberegisters, dessen Registerzahl der Anzahl der Bits einer Bitgruppe entspricht, eine Rücksetzeinrichtung in der Art zu realisieren ist, daß mittels diskreter Bauelemente und eines integrierten Schaltkreises eine Differenzier- und Impulsformeinrichtung mit dem Ziel gebildet wird, zu Beginn einer jeden Bitgruppe einen die an den Paralleleingängen des Schieberegisters anliegenden Spannungspotentiale in das Schieberegister einlesenden Impuls zu erzeugen. Durch die Realisierung gemäß Anspruch 2 kann somit eine Halbierung der Zahl der Register im Schieberegister, eine Halbierung der Anzahl der Schaltmittel und eine Reduzierung der Anzahl von Bauelementen in der Rücksetzeinrichtung erzielt werden, wodurch diese Ausgestaltung der Erfindung als besonders vorteilhaft anzusehen ist. Wie bereits erläutert, läßt die Realisierung gemäß Anspruch 2 ein gezieltes Lesen entweder in den ersten beiden oder in der dritten und vierten Bituntergruppe - also kein gleichzeitiges Lesen in allen vier Bituntergruppen - zu. In der überwiegenden Mehrheit der Einsatzfälle - das sind Störungs- und Fehlerfälle sowie Entwicklung und Erprobung von Systemkomponenten - sind die Informationsinhalte aller oder einzelner Bits einer Bituntergruppe - z. B. eines Informations-(B)-Kanals oder des Signalisierungskanals - zu lesen, aufzuzeichnen und auszuwerten, wodurch diese Einschränkung auf wenige Einsatzfälle begrenzt bleibt.

Die Ansprüche 4 bis 6 zeigen jeweils eine besonders vorteilhafte Realisierungsmöglichkeit für das Schieberegister, die Schaltmittel und den Anschluß der erfindungsgemäßen Schaltungsanordnung sowohl an die IOM-Schnittstelle als auch an die Aufzeichnungseinrichtung.

Im folgenden wird die Erfindung anhand von Zeichnungen näher erläutert. Dabei zeigen

Fig. 1 ein Schaltbild der erfindungsgemäßen Schaltungsanordnung sowie deren Anschluß an die IOM-Schnittstellen und an die Aufzeichnungseinrichtung und

Fig. 2 fünf Ablaufdiagramme zur Erläuterung der Funktion der erfindungsgemäßen Schaltungsanordnung.

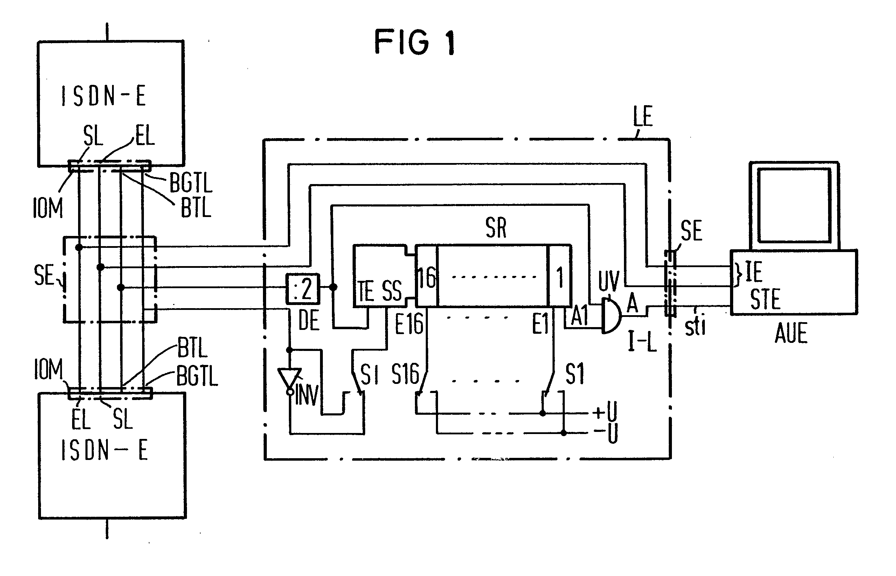

Fig. 1 zeigt zwei ISDN-Einrichtungen ISDN-E, die jeweils mit einer ISDN-orientierten Schnittstelle IOM versehen sind. Die beiden in integrierter Schaltkreistechnik realisierten ISDN-Einrichtungen ISDN-E stellen beispielsweise eine Übertragungseinrich tung mit Zweidraht-Duplex-Übertragungsverfahren und Echokompensation - wird im Teilnehmeranschlußbereich von ISDN-Vermittlungseinrichtungen eingesetzt - und eine Kommunikationsprotokoll-Steuereinrichtung dar. Jede der beiden ISDN-orientierten Schnittstellen IOM ist mit einer Empfangs- und Sendeleitung EL, SL sowie einer Bitgruppentaktleitung BGTL und einer Bittaktleitung BTL versehen. Die Sendeleitung SL einer ISDN-Einrichtung ISDN-E ist jeweils auf die Empfangsleitung EL der gegenüberliegenden ISDN-Einrichtung ISDN-E über entsprechende Verbindungen geführt. Über die Empfangs- bzw. Sendeleitungen EL, SL werden die in annähernd digitalen Signalen vorliegenden Informationen mit einer Datenrate von 256 KBit/s übermittelt. Über die Bittaktleitung BTL werden Bittaktfrequenzsignale bti mit einer Frequenz von 512 KHz und über die Bitgruppentaktleitung BGTL Bitgruppentaktfrequenzsignale bgti mit einer Frequenz von 8 KHz übertragen. Diese Frequenzsignale werden beispielsweise in der die Übertragungstechnik beinhaltenden ISDN-Einrichtung ISDN-E an den entsprechenden Schnittstellen abgegeben und zur gegenüberliegenden ISDN-Einrichtung ISDN-E übermittelt. Ebenso können die Frequenzsignale von der die Kommunikationsprotokoll-Steuerung beinhaltenden ISDN-Einrichtung ISDN-E abgegeben werden. Wer nun diese Frequenzsignale erzeugt, weiterleitet bzw. abgibt, hängt im wesentlichen davon ab, in welchem Bereich eines ISDN-Teilnehmeranschlußbereiches einer Vermittlungsstelle die ISDN-Einrichtungen ISDN-E angeordnet sind. Befinden sich die ISDN-Einrichtungen ISDN-E beispielsweise in Teilnehmereinrichtungen, so werden die Frequenzsignale von den an der Teilnehmereinrichtung ankommenden Informationssignalen, d. h. in der die Übertragungstechnik beinhaltenden ISDN-Einrichtung ISDN-E abgeleitet. In die Verbindungen zwischen den beiden ISDN-orientierten Schnittstellen IOM sei beispielhaft eine Steckeinrichtung SE eingefügt. Diese Steckeinrichtung SE kann entweder direkt auf einer Baugruppe oder auf deren Frontplatine - somit leicht extern zugänglich - angeordnet sein. Aus Gründen der Übersichtlichkeit des Blockschaltbildes sind die erforderlichen Erdpotential- bzw. Null-Volt-Verbindungen sowohl zwischen den beiden ISDN-Einrichtungen ISDN-E als auch in der nachfolgend erläuterten Schaltungsanordnung nicht in FIG 1 dargestellt. Die Empfangs- und die Sendeleitungen EL, SL sind über die Steckeinrichtung SE und über entsprechende Leitungen entweder direkt - nicht dargestellt, da eine weitere Alternative - oder über eine Leseeinrichtung LE an die Informationseingänge IE einer Aufzeichnungseinrichtung AUE geführt. Somit gelangen alle Informationen, die zwischen den beiden ISDN-Einrichtungen ISDN-E ausgetauscht werden, an die Informationseingänge IE der Aufzeichnungseinrichtung AUE. Die Bittaktleitung BTL wird ebenfalls über die Steckeinrichtung SE zu einem Eingang einer Dividiereinrichtung DE und der Ausgang dieser Dividiereinrichtung DE sowohl zu einem Takteingang TE eines Schieberegister SR als auch zu einem ersten Eingang eines UND-Verknüpfungsgliedes UV geleitet. Sowohl Schieberegister SR als auch UND-Verknüpfungsglied UV sind in der Leseeinrichtung LE, beispielsweise auf einer Leiterplatte, angeordnet. Die Bitgruppentaktleitung BGTL ist wiederum über die Steckeinrichtung SE mit einem in der Leseeinrichtung LE angeordneten Invertierglied INV und einem ersten Schaltkontakt eines Invertierumschalters SI verbunden. Der Ausgang des Invertiergliedes INV ist auf einen zweiten Schaltkontakt des Invertierumschalters SI geführt. Der Mittenkontakt des Invertierumschalters SI ist mit einem Schiebe-Setz-Eingang SS des Schieberegisters SR verbunden. Das Schieberegister SR bilden 16 seriell geschaltete flankengetriggerte Register bzw. J-K-Flip-Flops. Ein derartiges Schieberegister SR ist beispielsweise durch zwei seriell geschaltete, integrierte Low-Power-Schottky-Schaltkreise 74 166 - 8 Bit Schieberegister mit Paralleleingabe und Rücksetzeingang - realisierbar. Ein Eingang E1...E16 des Schieberegisters SR ist jeweils auf einen Mittenkontakt eines Kipp-Umschalters S1...S16 geführt. Sowohl alle ersten Schaltkontakte als auch alle zweiten Schaltkontakte der Kipp-Umschalter S1...S16 sind jeweils untereinander verbunden.

Alle ersten Schaltkontakte der Kippumschalter S1...S16 sind mit einer Spannungsquelle +U, die ein den logischen 1-Zustand der TTL-Technik repräsentierenden Spannungspotential aufweist und alle zweiten Schaltkontakte der Kipp-Umschalter S1...S16 mit einer Spannungsquelle -U, die ein den logischen 0-Zustand repräsentierenden Spannungspotential aufweist, verbunden. Der Ausgang A1 des in der Registerkette zuletzt angeordneten Flip-Flops bzw. der Ausgang des Schieberegisters SR ist über eine entsprechende Verbindung auf einen zweiten Eingang des UND-Verknüpfungsgliedes UV geleitet. Der Ausgang A dieses UND-Verknüpfungsgliedes UV gelangt über eine weitere Steckeinrichtung SE zum Steuereingang STE der Aufzeichnungseinrichtung AUE. Diese Steckeinrichtung SE kann sowohl an der Leseeinrichtung LE als auch alternativ an der Aufzeichnungseinrichtung AUE - nicht dargestellt - angeordnet sein.

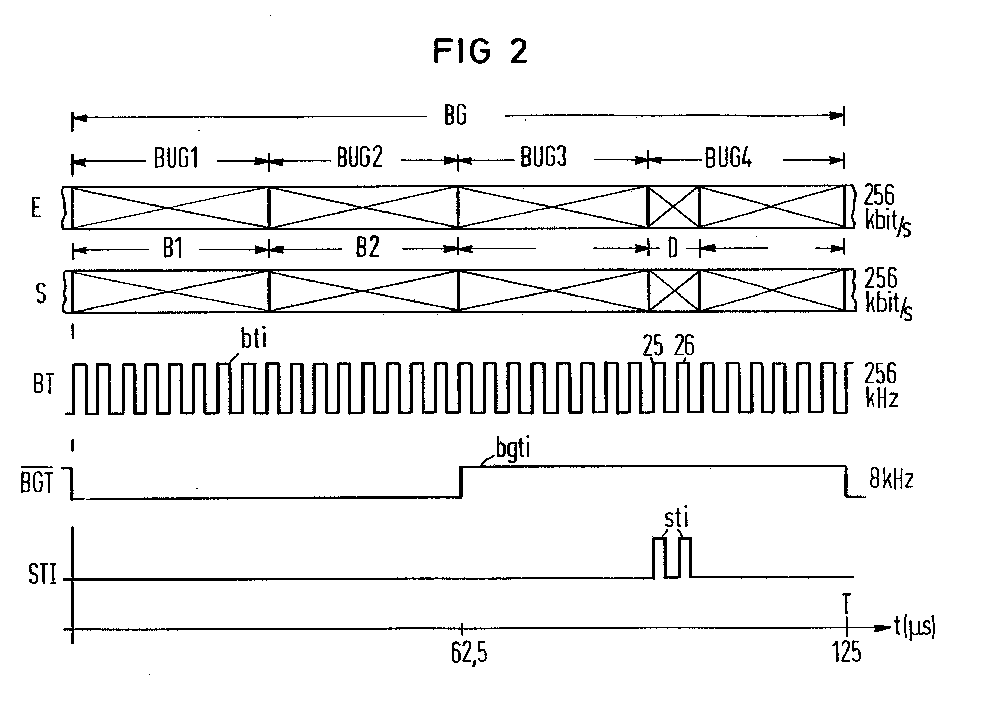

Die Schaltungsanordnung nach Fig. 1 wird mit Hilfe der in Fig.2 aufgezeigten Impuls-Zeit-Diagramme näher erläutert. Die Diagramme zeigen die Impulsfolge innerhalb eines Zeitabschnittes von 125 $\mu$s. Diese Zeit von 125 $\mu$s gibt die Periodendauer T der Bitgruppentaktsignale bgti und damit auch die Zeitdauer einer Bitgruppe BG an. Die ersten beiden mit E und S bezeichneten Diagramme zeigen schematisch die Unterteilung einer Bitgruppe BG in Bituntergruppen BUG. Eine Bitgruppe BG umfaßt 32 Bit, wodurch sich für jede Bituntergruppe BUG eine Anzahl von 8 Bit ergibt. Die erste und die zweite Bituntergruppe BUG 1, BUG 2 repräsentieren jeweils einen Informations-B-kanal eines ISDN-Teilnehmeranschlusses. Die dritte Bituntergruppe BUG 3 enthält den eingangs erläuterten Überwachungskanal. Der vierten Bituntergruppe BUG 4 ist - wie ebenfalls bereits erläutert - ein Aktivierungs-, ein Zugriffs- und ein Signalisierungskanal zugeordnet. Beispielhaft sei angenommen, daß die Aufzeichnungseinrichtung AUE die Informationen dieses 2-Bit-umfassenden Signalisierungskanals D lesen und aufzeichnen soll. Das folgende, mit BT bezeichnete Diagramm zeigt die 32 Bittaktimpulse, die nach einer Halbierung der 512 KHz-Bittaktfrequenz in der Dividiereinrichtung DE jeweils einer Bitgruppe BG zugeordnet sind. Aus diesem Bittaktimpuls-Diagramm ist zu ersehen, daß mittels des 25. und 26. Bittaktimpulses bti die Informationen im Signalisierungskanal übermittelt werden.

Ziel der erfindungsgemäßen Schaltungsanordnung ist es nun, zusätzlich zum 25. und 26. Bittaktimpuls bti zwei gleichartige und zur selben Zeit vorliegende Impulse zu erzeugen, die an die Aufzeichnungseinrichtung AUE weitergeleitet werden und dieser anzeigen, daß sie exakt zu diesen Zeiten die Informationen der Sende- und Empfangsleitungen SL, EL zu lesen und aufzuzeichnen hat. Da die Informationen des Signalisierungskanals D in der vierten Bituntergruppe BUG 4 angeordnet sind, werden die Bitgruppentaktsignale bgti mittels des entsprechend eingestellten Invertierumschalters SI über das Invertierglied INV an den Schiebe-Setz-Eingang SS des Schieberegisters SR geleitet. Somit liegt während der ersten 16 Bittaktimpulse bti ein die logische "0" repräsentierendes Spannungspotential am Schiebe-Setz-Eingang SS des Schieberegisters SR - siehe viertes, mit $\overline{BGT}$ bezeichnetes Diagramm - an. Hierbei werden bei jedem positiven Flankenwechsel der am Takteingang TE anliegenden Bittaktsignale bti die an den Flip-Flop-Eingängen E1...E16 mittels der Kipp-Umschalter S1...S16 eingestellten logischen Spannungspotentiale +U, -U in die jeweiligen Flip-Flops eingelesen und gespeichert. Wechselt nach 16 Bittaktimpulsen bti das Spannungspotential am Schiebe-Setz-Eingang SS zu einem die logische "1" repräsentierenden Spannungspotential +U, so werden bei jeder positiven Flanke der am Takteingang TE anliegenden Bittaktsignale bti die gespeicherten logischen Spannungspotentiale +U, -U um eine Registerstelle - d.h. um eine Flip-Flop-in Richtung Schieberegisterausgang A1 weitergeleitet bzw. verschoben. Die Kipp-Umschalter S1...S16 sind so einzustellen, daß während des 25. und 26. Bittaktimpulses bti ein die logische "1" repräsentierendes Spannungspotential +U am Ausgang A1 des Schieberegisters SR1 anliegt. Da die Signalisierungsbits ausgehend vom 17. Bit einer Bitgruppe BG - stellt den Beginn der dritten Bituntergruppe BUG 3 dar - als neuntes und zehntes Bit erscheinen, sind somit der neunte und zehnte Kipp-Umschalter S9, S10 so einzustellen, daß ein die logische "1" repräsentierendes Spannungspotential + U an den neunten und zehnten Eingang E9, E10, des Schieberegisters SR gelangt. Die restlichen Kipp-Umschalter S sind so einzustellen, daß ein die logische "0" repräsentierendes Spannungspotential -U an die Eingänge E des Schieberegisters SR anliegt. An dem mit dem Schieberegisterausgang A1 verbundenen zweiten Eingang des UND-Verknüpfungsgliedes UV liegt somit aufgrund der gewählten Kipp- Umschaltereinstellung S1...S16 während des 25. und 26. Bittaktimpulses ein die logische "1" repräsentierendes Spannungspotential an. Gleichzeitig liegen am ersten Eingang des UND-Verknüpfungsgliedes UV die seriellen Bittaktimpulse bti - auch der 25. und 26. Bittaktimpuls bti - an. Aufgrund der logischen UND-Verknüpfung werden im UND-Verknüpfungsglied UV der 25. und 26. Bittaktimpuls bti an dessen Ausgang A geleitet. Diese beiden Impulse - im fünften mit STI bezeichneten Diagramm mit Steuerimpulse sti bezeichnet - gelangen über eine entsprechende Verbindung an den Steuereingang STE der Aufzeichnungseinrichtung AUE. Diese beiden Steuerimpulse sti geben der Aufzeichnungseinrichtung AUE die Zeitpunkte an, bei denen sie die Informationen auf der Empfangs- und Sendeleitung EL, SL zu lesen und zu speichern hat. Als exakte Abtastzeitpunkte der Informationen können in der Aufzeichnungseinrichtung AUE die negativen Flanken der Steuerimpulse sti - diese repräsentieren annähernd die Mitte der Periodendauer eines Informationsimpulses - definiert werden. Als Aufzeichnungseinrichtung AUE kommen alle Protokolltester und 'Logiganalyser' in Betracht, die mehrere Informationseingänge IE und zumindest einen Steuereingang STE und eine Funktion zum Lesen und Aufzeichnen von Informationen auf Aufforderung aufweisen. Mit einer derartigen sehr einfachen Grundfunktion sind die meisten im Handel befindlichen Aufzeichnungseinrichtungen AUE ausgestattet.

## Ansprüche

1. Schaltungsanordnung zum Ermitteln der Lesezeitpunkte einer Aufzeichnungseinrichtung für das gezielte Lesen von in Binärelementen bzw. Bits enthaltenen Informationen in zwei seriellen, jeweils über eine Empfangs- bzw. Sendeleitung einer ISDN-orientierten Schnittstelle übermittelten, bitorientierten ISDN-Informationssignalströmen, die mittels kontinuierlich aufeinanderfolgender Bitgruppen gebildet werden, wobei jede Bitgruppe eine vorgegebene Anzahl von Bituntergruppen bzw. Kanälen mit einer bestimmten Anzahl von Bits mit definierten Informationsinhalten aufweist, mit jeweils einer zusätzlichen, der ISDN-orientierten Schnittstelle zugeordneten und jeweils Bittaktsignale bzw. Bitgruppentaktsignale aufweisenden Taktleitung, wobei die Taktsignale von einer von zwei mit den ISDN-orientierten Schnittstellen versehenen ISDN-Einrichtungen zur jeweils anderen übermittelt werden und die ISDN-Informationssignalströme der Sende- bzw. Empfangsleitung entgegengesetzte Übermittlungsrichtung aufweisen,

**dadurch gekennzeichnet,**

daß ein Takteingang (TE) eines eine auf die Anzahl von Bits einer Bitgruppe (BG) abgestimmte Anzahl von Registern aufweisenden Schieberegisters (SR) zusätzlich mit der die Bittaktsignale (bti) führenden Taktleitung (BT-L) verbunden ist, daß ein Schiebe-Setz-Eingang (SS) des Schieberegisters (SR) über eine eine mittels der Bitgruppentaktsignale (bgti) eine Schieberegister-Rücksetzinformation erzeugende Rücksetzeinrichtung mit der die Bitgruppentaktsignale (bgti) führenden Taktleitung (BGTL) verbunden ist, daß das Schieberegister (SR) eine der Registeranzahl entsprechende Anzahl von Paralleleingängen (E) aufweist und jeder dieser Paralleleingänge (E) über ein Schaltmittel (S) mit einem die beiden Binärzustände repräsentierenden Spannungspotential (U) verbindbar ist, daß der Schieberegisterausgang (A) und die Bittaktsignale (bti) führende Taktleitung (BT L) auf jeweils einen Eingang eines UND-Verknüpfungsgliedes (UV) geführt ist, daß der Ausgang des UND-Verknüpfungsgliedes (UV) und zusätzlich die Sende- und Empfangsschnittstellenleitungen (SL, EL) im Sinne einer Aufzeichnung der Informationsinhalte der mittels der Schaltmittel (S) bestimmten Bits der Bitgruppen (BG) bzw. Bituntergruppen (BUG) mit einer Aufzeichnungseinrichtung (AU E) verbunden sind.

2. Schaltungsanordnung nach Anspruch 1,

**dadurch gekennzeichnet,**

daß die Anzahl der Register eines Schieberegisters (SR) der Hälfte der Anzahl von Bits einer Bitgruppe (BG) entspricht und daß die Rücksetzeinrichtug durch ein Invertierglied (INV) und ein Schaltmittel (SI) realisiert ist, wobei das Invertierglied (INV) mittels des Schaltmittels (SI) in Abhängigkeit davon, für welche Bitgruppe (BG) die Lesezeitpunkte zu ermitteln sind, in die vom Schiebe-Setz-Eingang (SS) zur Taktleitung (BGTL) führende Verbindung einfügbar bzw. aus dieser entfernbar ist.

3. Schaltungsanordnung nach einem der vorhergehenden Ansprüche,

**dadurch gekennzeichnet,**

daß den Bituntergruppen (BUG) jeweils zwei ISDN-Informationskanäle, ein ISDN-Signalisierungskanal sowie weitere Überwachungs- und Telemetriekanäle zugeordnet sind.

4. Schaltungsanordnung nach einem der vorhergehenden Ansprüche,
**dadurch gekennzeichnet,**
daß das Schieberegister (SR) mittels seriell geschalteter, flankengetriggerter J/K-Flip-Flops gebildet ist.

5. Schaltungsanordnung nach einem der vorhergehenden Ansprüche,
**dadurch gekennzeichnet,**
daß die Schaltmittel durch Kipp-Umschalter realisiert sind.

6. Schaltungsanordnung nach einem der vorhergehenden Ansprüche,
**dadurch gekennzeichnet,**
daß das Schieberegister (SR), die Rücksetzeinrichtung, die Schaltmittel (S) und das UND-Verknüpfungsglied (UV) in einer separaten Leseeinrichtung (LE) angeordnet sind und die Verbindungen zu bzw. von der ISDN-orientierten Schnittstelle (IOM) und Aufzeichnungseinrichtung (AUE) über Steck- oder Klemmeinrichtungen (SE) geführt werden.

FIG 1

# FIG 2

EP 0 299 207 A2